# EUROPÄISCHE PATENTSCHRIFT

(11) **EP 1 188 629 B1**
(45) Veröffentlichungstag und Bekanntmachung des Hinweises auf die Patenterteilung: **24.08.2005**
(21) Anmeldenummer: 01116291.4
(22) Anmeldetag: 05.07.2001
(51) Int. Cl.: B60S 3/06

(54) **Laufkatzenführung für linear bewegbare Waschbürsten in Fahrzeug-Reinigungsanlagen**
Trolley guide for washing brushes having a linear motion in vehicle cleaning installations
Rail de guidage pour chariots de brosses de lavage ayant un déplacement linéaire dans les installations de lavage de voitures

(30) Priorität: 01.09.2000 DE 10043210; 03.09.2000 DE 10043247
(43) Veröffentlichungstag der Anmeldung: 20.03.2002
(73) Patentinhaber: Otto Christ AG, Autowaschanlagen, 87734 Benningen (DE)
(72) Erfinder: Christ, Otto, 87700 Memmingen (DE)
(74) Vertreter: Ernicke, Hans-Dieter

(56) Entgegenhaltungen:
- WO-A-94/03348
- US-A- 5 901 398

## Beschreibung

Die Erfindung bezieht sich auf eine Laufkatzenführung für linear bewegbare Waschbürsten in Fahrzeug-Reinigungsanlagen.

Im Falle vertikaler Waschbürsten befindet sich am Querjoch eines ortsfesten oder fahrbaren Portals eine Führung für Laufkatzen, in der die vertikalen Waschbürsten hängend gelagert und angetrieben sind (z.B. DE-A-19 54 259, DE-U-298 14 758).

Die horizontalen Waschbürsten sind in vertikalen Führungen der Portalpfosten mit Hilfe der Laufkatzen geführt und über Ketten- oder Seilzüge motorisch auf- und abbewegbar. In einer bekannten Variante dieser Art sind in den Laufkatzen horizontal gelagerte und vertikal herabhängende Schwenkarme angeordnet, an deren Ende die Waschbürsten drehbar gelagert und angetrieben ist (z.B. DE 35 44 390 B).

In allen Fällen bestehen die Laufkatzenführungen an den Waschportalen aus rostanfälligen, häufig unebenen Walzstahlprofilen, die sich überdies als montage- und wartungsunfreundlich herausgestellt haben. Die Toleranzen der Laufkatzen in ihren Führungen sind häufig zu groß.

Der Erfindung liegt daher die Aufgabe zugrunde, Laufkatzenführungen für linear bewegbare Waschbürsten in Fahrzeug-Reinigungsanlagen zu entwickeln, die als leichte, fertigungsgenaue und montagenfreundliche Konstruktionselemente bereit gestellt werden und durch deren Zusammenwirken gegenüber dem Stand der Technik ein sprunghaft verbesserter Gesamterfolg erzielt wird.

Gelöst wird diese Aufgabe dadurch, dass die Führung aus mindestens einem stirnseitig versteiften Leichtmetall-Strangpress-Hohlprofil besteht, das an einer Breitseite offen ausgebildet ist und an seiner Innenseite U-förmig ausgebildete Stege und an seinen Außenseiten durchgehende Stege, hinterschnittene Nuten oder dergleichen, Führungs- bzw. Befestigungselemente für die verschiebbare Aufnahme von Steuerungsgerätschaften oder dergleichen aufweist.

Hierbei erweist es sich als besonders vorteilhaft, wenn zwei im Querschnitt gleiche U-förmige Strangpresshohlprofile aus einer Leichtmetalllegierung mit ihren gegeneinander gerichteten Schenkeln unter Bildung eines Abstandes parallel zueinander angeordnet und stirnseitig miteinander verbunden sind, wobei die einander zugekehrten Außenflächen der Schenkel und Stege der Strangpressprofile als Laufflächen für die Lauf- und Führungsräder der Laufkatzen eben und glatt ausgebildet sind.

Strangpressprofile dieser Art zeichnen sich durch geringes Gewicht, präzise Formgebung und wartungsfreundliches Verhalten aus. Sie bedürfen keiner spanabhebenden Nachbearbeitung und sind sofort nach ihrer Montage als Laufkatzenführung funktionsbereit. Die gegenüber Stahl oder Eisen höheren Materialkosten sind unerheblich gegenüber den Vorteilen, welche Leichtmetallstrangpressprofile der geschilderten Art für Laufkatzenführungen erzielen. Es kommt hinzu, dass die beim Betrieb von Waschstraßen oder Portalwaschanlagen entstehenden Wasserdämpfe keinerlei negative Spuren an den Führungsflächen der Strangpresshohlprofile hinterlassen, wodurch sich ein wartungsmäßiger Vorteil erheblicher Art ergibt.

Weitere Merkmale und Ausgestaltungen der Erfindung sind in den Unteransprüchen offenbart. Gemäß Anspruch 3 sind in den Schenkeln und im Steg des einzelnen Strangpressprofiles in sich geschlossene, durchgehende Hohlräume vorhanden, welche dem Strangpressprofil eine außerordentliche Formstabilität verleihen. Diese Hohlräume sind gemäß Anspruch 4 untereinander unverbunden, um die Festigkeit nicht stellenweise zu mindern.

Mit dem Anspruch 5 wird gelehrt, dass im Eckbereich einiger Hohlräume durchgehende, etwa zu drei viertel geschlossene Rinnen zur Aufnahme selbstschneidender Schrauben für die Befestigung stirnseitiger Verbindungsplatten vorgesehen sind. Diese Verbindungsplatten weisen zweckmäßigerweise Flansche oder abgewinkelte Stege auf, damit sie mit anderen Bauelementen, beispielsweise Pfosten oder Riegeln von Portalen verschraubt werden können. Die Verbindungsplatten halten die Strangpressprofile konstant in ihrem Abstand und verhindern deren Verwindung und stabilisieren somit die Führungseigenschaft der Strangpresshohlprofile.

Außerdem können an den Außenseiten der Strangpresshohlprofile durchgehende Stege, hinterschnittene Nuten oder dergleichen Führungs- bzw. Befestigungselemente für die verschiebbare Aufnahme von Steuerungsgerätschaften oder dergleichen vorgesehen sein. Die Ausgestaltung solcher Führungs- bzw. Befestigungselemente ist lediglich eine Frage der Ausbildung der Strangpresswerkzeuge und stellt somit keinen eigenen Kostenfaktor dar.

Die erfindungsgemäßen Strangpresshohlprofile sind bevorzugt aus einer AlMgSi-0,5-Legierung hergestellt, was nicht ausschließt, dass auch andere Leichtmetalllegierungen ausgewählt werden können.

Die erfindungsgemäße Laufkatzenführung ist verschiedener Anordnung bei Fahrzeug-Reinigungsanlagen einsetzbar, ohne dass es darauf ankommt, ob es sich um Waschstraßen oder um hin- und hergehende Portalwaschanlagen handelt.

In einem ersten Ausführungsbeispiel ist die erfindungsgemäße Laufkatzenführung als Quertraverse zur Führung vertikaler hängender Waschbürsten ausgebildet. Eine solche Quertraverse kann ortsfest an einem Portal befestigt oder auch längs der Schlepprichtung in einer Autowaschstraße an einem Portal hin- und herbewegbar geführt sein.

In einem anderen Anwendungsfall ist die Laufkatzenführung als Portalpfosten zur Führung einer horizontalen Waschbürste ausgebildet. Dies kann sowohl an einer ortsfesten Portalanordnung als auch an einem hin- und hergehenden beweglichen Portal vorgesehen sein.

Im Sinne des Erfindungsgedankens gemäß Anspruch 9 kann die Laufkatzenführung auch als oberer Längsträger in einer ortsfesten, räumlich rahmenförmigen Portalanlage zur Führung von Quertraversen vorgesehen sein, die längs der Portalanlage parallel zur Schlepprichtung der Fahrzeuge hin- und herbewegbar antreibbar sind. In diesem Fall kann es offen bleiben, ob zwei Strangpressprofile im Abstand zueinander angeordnet sind, weil bei dieser Längsträger-Führung die Anordnung eines einzigen Strangpresshohlprofiles an jeder Seite der Portalanlage genügt, um darin die Laufkatze zur Führung der Quertraverse zu bewegen. Dies schließt natürlich nicht aus, dass auch im Sinne des Anspruches 1 an jeder Seite der Portalanlage zwei Strangpressprofile im Abstand zueinander angeordnet und stirnseitig miteinander verbunden sind, um eine formschlüssige Aufnahme der Laufkatze für die Quertraverse zu bilden.

Diese und weitere Merkmale der Erfindung sind in der Zeichnung schematisch und beispielsweise dargestellt. Es zeigen:
- Figur 1:: einen Querschnitt durch zwei im Abstand zueinander gehaltene und stirnseitig miteinander verbundene Strangpressprofile,
- Figur 2:: eine Draufsicht auf ein Portal mit einer oberen horizontal und quer zur Fahrzeuglängsachse gerichteten Traverse zur Aufnahme der Laufkatzenführung für vertikale Waschbürsten,
- Figur 3:: eine Frontalansicht eines Portals, bei dem die Strangpresshohlprofile in den Pfosten zur Führung einer horizontalen Waschbürste angeordnet sind
- Figur 4:: eine Draufsicht auf eine ortsfeste, räumlich rahmenförmige Portalanlage, bei der die Strangpresshohlprofile an beiden Längsseiten als Längsträger zur verschiebbaren Aufnahme einer Quertraverse für vertikale Waschbürsten ausgebildet sind und
- Figur 5:: einen Querschnitt durch ein einteiliges Strangpress-Hohlprofil aus Leichtmetall.

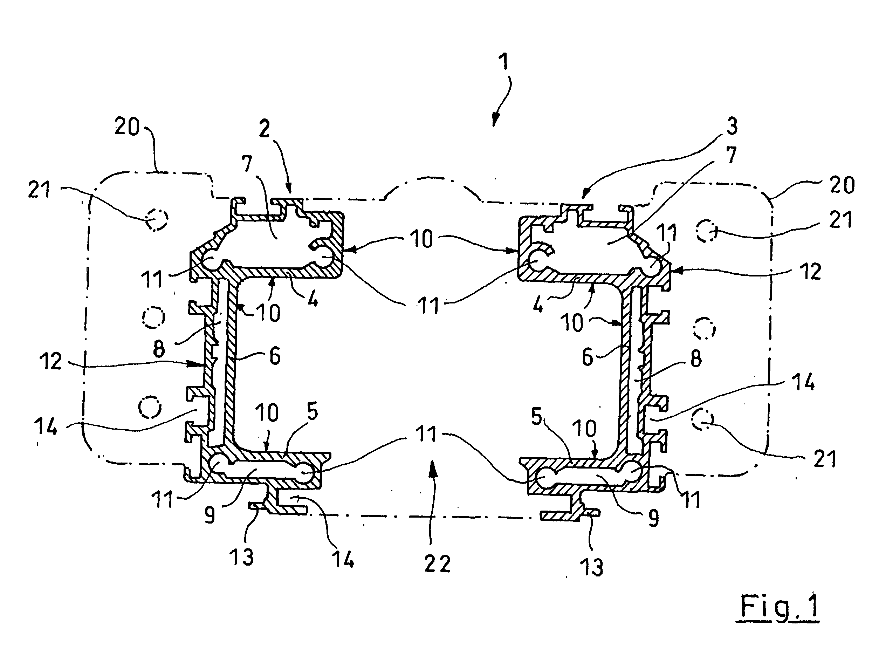

Im Beispiel der Figur 1 ist im Querschnitt eine einzelne Laufkatzenführung (1) dargestellt, die aus zwei Strangpresshohlprofilen (2,3) besteht. Diese Strangpresshohlprofile sind im Abstand (22) zueinander angeordnet und stirnseitig beispielsweise durch Platten (20) miteinander verbunden. Damit wird eine Lagestabilität der beiden Strangpresshohlprofile (2,3) erzeugt.

Die Strangpresshohlprofile (2,3) sind im Prinzip U-förmig ausgebildet, wobei die Schenkel (4,5) beider Strangpresshohlprofile (2,3) einander zugekehrt angeordnet sind. Die oberen Schenkel (4) weisen Hohlräume (7), die unteren Schenkel (5) Hohlräume (9) auf. Der Steg (6) ist ebenfalls mit einem Hohlraum (8) versehen. Diese Hohlräume (7,8,9) haben die Aufgabe, das Material der Strangpresshohlprofile (2,3) so gering wie möglich zu halten und dennoch eine vollkommen ausreichende Stabilität und Starrheit zu gewähren.

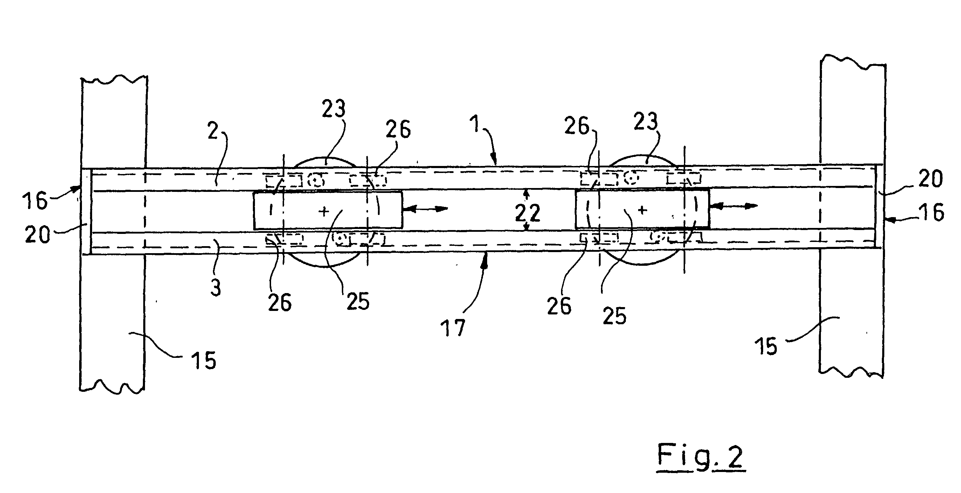

Die einander zugekehrten Flächen der Schenkel (4,5) und der Stege (6) sind als Laufflächen (10) glatt und eben ausgebildet. Entlang dieser Laufflächen (10) werden die Führungselemente der Laufkatzen (25) (vgl. Figuren 2 bis 4) in Form von Lauf- bzw. Führungsrollen (26) oder Gleitschuhen geführt.

In bestimmten Eckbereichen der Hohlräume (7,9) der Schenkel (4,5) sind durchlaufende Rinnen (11) strangpresstechnisch gebildet, die etwa zu drei vierteln offen sind. Diese Rinnen (11) bilden zur Aufnahme selbstschneidender-Schrauben, um z.B. die Verbindungsplatten (20) zu befestigen oder Zentrierelemente aufzunehmen. Die Verbindungsplatten (20) sind in ihrer Außenkontur in Figur 1 strichpunktiert dargestellt. Ihre Form hängt weitgehend davon ab, mit welchen Bauteilen die Verbindungsplatten (20) verschraubt werden sollen. Strichpunktiert sind Flanschbohrungen (21) dargestellt zur Befestigung der Verbindungsplatten (20) mit anderen Bauelementen von Portalen oder dergleichen.

Die Flanschbohrungen (21) können auch an abgewinkelten Stegen der Verbindungsplatten (20) angeordnet sein, um eine Schraubverbindung rechtwinkelig oder quer zur Längsachse der Laufkatzenführung (1) zu ermöglichen.

An den Außenseiten (12) der Strangpresshohlprofile (2,3) sind längslaufende Stege (13), hinterschnittene Nuten (14) oder sonstige Verbindungselemente angeordnet, um an diesen verschiebbar Steuerelemente, Schalter oder dergleichen zum Betrieb der Waschanlage notwendige Teile zu befestigen. Die Stege (13) oder nicht hinterschnittene Nuten (14) können auch als Spannpratzen Anwendung finden, um die Strangpressprofile (2,3) an geeigneten Unterlagen zu befestigen.

Im Beispiel der Figur 2 ist die Anwendung der erfindungsgemäßen Laufkatzenführung zur Bildung einer Quertraverse (17) an einer Portalwaschanlage dargestellt. Hierbei ist die Laufkatzenführung (1) beispielsweise auf einem aufrechten Pfosten (16) des Portals (15) befestigt.

Im Beispiel der Figur 2 erkennt man an beiden stirnseitigen Enden der Laufkatzenführung (1) die Verbindungsplatten (20), welche den Abstand (22) gewährleisten. Nicht dargestellt ist in Figur 2 die Flanschverbindung der Verbindungsplatten (20) mit dem Pfosten (16) oder dem Portal (15), die auf verschiedene Weise gelöst werden kann.

Die erfindungsgemäße Quertraverse (17), die durch die Laufkatzenführung (1) gebildet ist, dient zur Führung von Laufkatzen (25) mit Hilfe der Lauf- bzw. Führungsrollen (26), um vertikale Waschbürsten (23) hängend zu lagern zu quer zur Fahrzeuglängsachse gegenläufig zu verschieben. Da solche Laufkatzenführungen hinreichend bekannt sind, bedarf es keiner näheren konstruktiven Darstellung. Es ist auch offen gelassen, mit welchen motorischen Antrieben die Laufkatzen (25) längs der Laufkatzenführung (1) hin- und herbewegt werden.

Man erkennt aber, dass die Quertraverse (17) nicht nur Führungseigenschaft sondern auch statische Aufgaben erfüllt, um das Portal (15) zu stabilisieren.

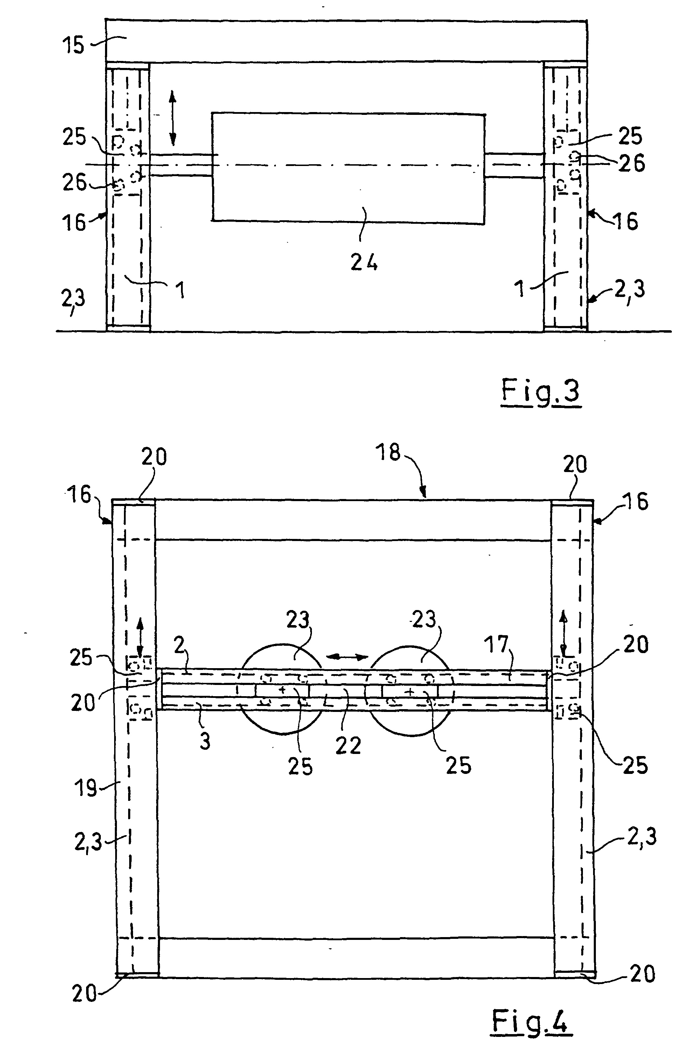

Im Beispiel der Figur 3 ist dargestellt, dass die Laufkatzenführung (1) als Pfosten (16) eines Portals (15) ausgebildet ist, um Laufkatzen (25) zur Führung einer horizontalen Waschbürste (24) vertikal hin- und herbewegbar anzutreiben. Auch hier sind die Antriebsmittel zur Höhenbewegung der horizontalen Waschbürste (24) der Einfachheit halber nicht dargestellt. Es ist auch offen gelassen, ob die Pfosten (16) ortsfest angeordnet oder als fahrbares Portal ausgebildet sind.

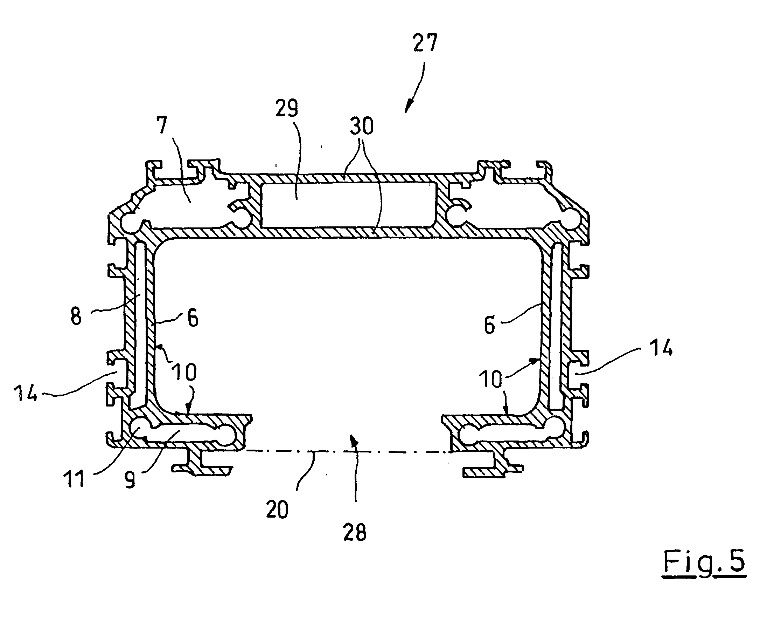

Im Beispiel der Figur 4 ist eine ortsfeste, räumlich rahmenförmige Portalanlage (18) in Draufsicht dargestellt. Diese weist aufrechte Pfosten sowie Längs- und Querträger auf. Auf den Längsträgern ist im oberen Bereich jeweils ein als Laufkatzenführung (1) ausgebildeter Längsträger (19) befestigt oder stattdessen angeordnet, welcher eine Laufkatzenführung für eine horizontale Quertraverse (17) bildet, die ihrerseits wieder Laufkatzenführungen (1) für vertikale Waschbürsten (23) enthält. Wie die Pfeile in Figur 4 zeigen, ist die Quertraverse (17) in Richtung der Fahrzeuglängsachse hin- und herbewegbar, was deshalb zweckmäßig ist, um die vertikalen Waschbürsten (23) beim Bearbeiten der Frontal- und Heckflächen eines Fahrzeuges in längeren Kontakt zu diesen Fahrzeugflächen zu halten. Zugleich sind die vertikalen Waschbürsten (23) auch quer, d.h. längs zur Quertraverse (17) gegenläufig hin- und herbewegbar, damit sie auch die Bearbeitung der Seitenflächen eines Fahrzeuges übernehmen können.

Durch die verschiedenen Ausführungsbeispiele der Figuren 2 bis 4, die nicht vollständig zu sein brauchen, ist erkennbar, dass man eine erfindungsgemäße Laufkatzenführung (1) gemäß Figur 1 sowohl als einzelnes Element als auch als statisch belastbares Verbindungsglied in einem Portal, beispielsweise als Pfosten (16), als Quertraverse (17) oder als Längsträger (19) verwenden kann.

Daraus ergibt sich die Möglichkeit, die erfindungsgemäßen Strangpresshohlprofile (2,3) baukastenmäßig anzusehen und in verschiedenen Gruppierungen anzuordnen.

Die Erfindung beschränkt sich nicht auf die dargestellten Ausführungsbeispiele sondern erstreckt sich auch auf alle Varianten, die sich in Kenntnis der erfindungsgemäßen Offenbarung ergeben.

So ergibt sich beispielsweise aus Figur 5 eine Variante zu Figur 1, wonach das Strangpreßhohlprofil (27) einteilig ausgebildet ist und an seiner breiten Unterseite (28) offen ausgebildet ist. An der oberen Breitseite ist das Profil (27) geschlossen ausgebildet, was durch die beiden, einen Hohlraum (29) einschließenden Profilwände (30) geschieht.
Die Stabilität dieses Profils (27) unter Last wird wiederum durch stirnseitig angesetzte, insbesondere angeschraubte Platten (20) - vergleiche Figur 1 - erreicht, für deren Schrauben die Rinnen (11) vorgesehen sind. In Figur 5 ist lediglich symbolisch der Rand der Platte (20) strichpunktiert dargestellt.

### STÜCKLISTE

- 1: Laufkatzenführung
- 2: Strangpresshohlprofil
- 3: Strangpresshohlprofil
- 4: oberer Schenkel
- 5: unterer Schenkel
- 6: Steg
- 7: Hohlraum
- 8: Hohlraum
- 9: Hohlraum
- 10: Laufflächen
- 11: Rinne
- 12: Außenseite
- 13: Steg
- 14: hinterschnittene Nut
- 15: Portal
- 16: Pfosten
- 17: Quertraverse
- 18: Portalanlage
- 19: Längsträger
- 20: Verbindungsplatte
- 21: Flanschbohrung
- 22: Abstand
- 23: hängende Waschbürste
- 24: horizontale Waschbürste
- 25: Laufkatze
- 26: Lauf-Führungsrolle
- 27: einteiliges Strangpreßhohlprofil
- 28: offene Breitseite
- 29: Hohlraum
- 30: Profilwand

## Patentansprüche

1. Laufkatzenführung für linear bewegbare Waschbürsten in Fahrzeug-Reinigungsanlagen, **dadurch gekennzeichnet, dass** die Führung aus mindestens einem stirnseitig versteiften Leichtmetall-Strangpreß-Hohlprofil (27) besteht, das an einer Breitseite offen ausgebildet ist und an seiner Innenseite u-förmig ausgebildete Stege (6) und an seinen Außenseiten durchgehende Stege (13), hinterschnittene Nuten (14) oder dergleichen, Führungs- bzw. Befestigungselemente für die verschiebbare Aufnahme von Steuerungsgerätschaften oder dergleichen aufweist.

2. Laufkatzenführung nach Anspruch 1, **dadurch gekennzeichnet, dass** zwei im Querschnitt vornehmlich gleiche U-förmige Strangpresshohlprofile (2,3) aus einer Leichtmetall-Legierung mit ihren gegeneinander gerichteten Schenkeln (4,5) unter Bildung eines Abstandes (22) parallel zueinander angeordnet und stirnseitig miteinander verbunden (20) sind, wobei die einander zugekehrten Außenflächen der Schenkel (4,5) und Stege (6) der Strangpressprofile (2,3) als Laufflächen für die Lauf- und Führungsräder der Laufkatzen eben und glatt ausgebildet sind.

3. Laufkatzenführung nach Anspruch 1 oder 2, **dadurch gekennzeichnet, dass** die Schenkel (4,5) und der Steg (6) des einzelnen Strangpressprofils (2,3) in sich geschlossene, durchgehende Hohlräume (7,8,9) aufweisen.

4. Laufkatzenführung nach Anspruch 3, **dadurch gekennzeichnet, dass** die Hohlräume (7,8,9) untereinander unverbunden sind.

5. Laufkatzenführung nach einem der Ansprüche 1 bis 4, **dadurch gekennzeichnet, dass** im Eckbereich einiger Hohlräume (7,9) durchgehende, etwa zu drei viertel geschlossene Rinnen (11) zur Aufnahme selbstschneidender Schrauben für die Befestigung stirnseitiger Verbindungsplatten (20) vorgesehen sind.

6. Laufkatzenführung nach einem der Ansprüche 1 bis 5, **dadurch gekennzeichnet, dass** das einzelne Strangpressprofil (2,3) aus einer AlMgSi 0,5-Legierung besteht.

7. Laufkatzenführung nach einem der Ansprüche 1 bis 6, **dadurch gekennzeichnet, dass** sie als Quertraverse (17) zur Führung vertikaler hängender Waschbürsten (23) ausgebildet ist.

8. Laufkatzenführung nach einem der Ansprüche 1 bis 6, **dadurch gekennzeichnet, dass** sie als Portalpfosten (16) zur Führung einer horizontalen Waschbürste (24) ausgebildet ist.

9. Laufkatzenführung nach einem der Ansprüche 1 bis 6, **dadurch gekennzeichnet, dass** sie als obere Längsträger (19) in einer ortsfesten, räumlich rahmenförmigen Portalanlage (18) zur Führung von Quertraversen (17) vorgesehen sind, die längs der Portalanlage (18) parallel zur Schlepprichtung der Fahrzeuge hin- und herbewegbar antreibbar sind.

## Claims

1. Trolley guide for washing brushes having a linear motion in vehicle cleaning installations, **characterized in that** the guide is composed of at least one light metal extruded hollow profile (27) which is stiffened on the end side and is designed such that it is open on one wide side and, on its inside, has webs (6) of U-shaped design and, on its outsides, continuous webs (13), undercut grooves (14) or similar guide or fastening elements for displaceably holding control equipment or the like.

2. Trolley guide according to Claim 1, **characterized in that** two U-shaped extruded hollow profiles (2, 3) which are primarily identical in cross section and are composed of a light metal alloy are arranged with their mutually facing limbs (4, 5) parallel to each other with a spacing (22) being formed, and are connected (20) to each other on the end side, the mutually facing outer surfaces of the limbs (4, 5) and webs (6) of the extruded profiles (2, 3) being of flat and smooth design as running surfaces for the running and guide wheels of the trolleys.

3. Trolley guide according to Claim 1 or 2, **characterized in that** the limbs (4, 5) and the web (6) of the individual extruded profile (2, 3) have continuous cavities (7, 8, 9) which are self-contained.

4. Trolley guide according to Claim 3, **characterized in that** the cavities (7, 8, 9) are not connected to one another.

5. Trolley guide according to one of Claims 1 to 4, **characterized in that** continuous, approximately up to three-quarters-closed channels (11) are provided in the corner region of some cavities (7, 9) to receive self-tapping screws for the fastening of end-side connecting plates (20).

6. Trolley guide according to one of Claims 1 to 5, **characterized in that** the individual extruded profile (2, 3) is composed of an AlMgSi 0.5 alloy.

7. Trolley guide according to one of Claims 1 to 6, **characterized in that** it is designed as a crosspiece (17) for guiding vertical, hanging washing brushes (23).

8. Trolley guide according to one of Claims 1 to 6, **characterized in that** it is designed as a portal post (16) for guiding a horizontal washing brush (24).

9. Trolley guide according to one of Claims 1 to 6, **characterized in that** they are provided as upper longitudinal members (19) in a positionally fixed, spatially frame-shaped portal installation (18) for guiding crosspieces (17) which can be driven in a manner such that they can be moved to and fro along the portal installation (18) parallel to the direction in which the vehicles are dragged.

## Revendications

1. Guidage de chariot pour brosses de lavage à déplacement linéaire dans les installations de lavage de véhicules, **caractérisé en ce que** le guidage se compose d'au moins un profilé filé creux en métal léger (27) renforcé du côté frontal, qui est réalisé avec un côté large ouvert et qui présente au niveau de son côté interieur des âmes (6) réalisées en forme de U et au niveau de ses côtés extérieurs des âmes continues (13), des rainures en contre-dépouille (14) ou similaires, des éléments de guidage ou de fixation pour la réception à coulissement d'arbres d'appareils de commande ou similaires.

2. Guidage de chariot selon la revendication 1, **caractérisé en ce que** deux profilés filés creux en forme de U (2, 3) de section transversale substantiellement identique, constitués d'un alliage de métal léger sont disposés parallèlement l'un à l'autre et connectés l'un à l'autre (20) du côté frontal avec leurs, branches orientées l'une vers l'autre (4, 5) en formant un espacement (22), les surfaces extérieures tournées l'une vers l'autre des branches (4, 5) et des âmes (6) des profilés filés (2, 3) étant réalisées lisses et plates sous forme de surfaces de roulement pour les roues de roulement et de guidage des chariots.

3. Guidage de chariot selon la revendication 1 ou 2, **caractérisé en ce que** les branches (4, 5) et l'âme (6) du profilé filé individuel (2, 3) présentent des espaces creux continus (7, 8, 9) fermés sur eux-mêmes.

4. Guidage de chariot selon la revendication 3, **caractérisé en ce que** les espaces creux (7, 8, 9) ne sont pas connectés les uns aux autres.

5. Guidage de chariot selon l'une quelconque des revendications 1 à 4, **caractérisé en ce que** l'on prévoit dans la région des coins de quelques espaces creux (7, 9), des rigoles (11) continues, environ fermées au trois quarts, pour recevoir des vis autotaraudeuses pour la fixation de plaques de connexion (20) du côté frontal.

6. Guidage de chariot selon l'une quelconque des revendications 1 à 5, **caractérisé en ce que** le profilé filé individuel (2, 3) se compose d'un alliage 0,5 de AlMgSi.

7. Guidage de chariot selon l'une quelconque des revendications 1 à 6, **caractérisé en ce qu'**il est réalisé sous forme de traverse (17) pour le guidage de brosses de lavage verticales suspendues (23).

8. Guidage de chariot selon l'une quelconque des revendications 1 à 6, **caractérisé en ce qu'**il est réalisé sous forme de montants de portique (16) pour le guidage d'une brosse de lavage horizontale (24).

9. Guidage de chariot selon l'une quelconque des revendications 1 à 6, **caractérisé en ce qu'**il est prévu sous forme de support longitudinal supérieur (19) dans une installation de portique (18) en forme de cadre fixe tridimensionnel pour le guidage de traverses (17), qui peuvent être entraînées d'avant en arrière le long de l'installation de portique (18) parallèlement à la direction de remorquage des véhicules.
